# EUROPÄISCHE PATENTANMELDUNG

(11) **EP 4 236 061 A2**
(43) Veröffentlichungstag der Anmeldung: **30.08.2023**
(21) Anmeldenummer: 23181546.5
(22) Anmeldetag: 20.12.2021
(51) Int. Cl.: H02S 30/00

(54) **ABDECKVORRICHTUNG**

(30) Priorität: 05.01.2021 DE 102021100081
(62) Teilanmeldung aus: 21216131.9
(71) Anmelder: SL Rack GmbH, 83527 Haag (DE)
(72) Erfinder: Schletter, Ludwig, 83527 Haag i. OB (DE)
(74) Vertreter: Lichtnecker, Markus Christoph

(57) **Zusammenfassung**

Die Erfindung betrifft eine Abdeckvorrichtung zum Abdecken eines Befestigungsbereichs eines Dachs zur Befestigung eines Solarpanels oder eines Photovoltaikmoduls, aufweisend eine Metallplatte mit einer Aussparung für einen Dachhaken, mit einem verformbaren Anpassbereich und mit einem Abdeckbereich, wobei der Abdeckbereich Riffelungen aufweist, und eine die Aussparung umschließende Gummimanschette.

## Beschreibung

Die Erfindung betrifft eine Abdeckvorrichtung zum Abdecken eines Befestigungsbereichs eines Dachs zur Befestigung eines Solarpanels oder eines Photovoltaikmoduls.

Zur Montage einer Montageschiene für ein Solarpanel oder ein Photovoltaikmodul auf einem Schrägdach müssen Dachhaken durch die vorhandene Dacheindeckung geführt werden.

Herkömmlich werden hierzu Dachziegel mechanisch bearbeitet, was mit einem vergleichsweise hohen Aufwand verbunden ist und zudem zu Undichtigkeiten in der Dacheindeckung führen kann.

Auch können hohe Schneelasten einen Ziegelbruch verursachen, wenn die Schneelast auf den Solarpanelen oder den Photovoltaikmodulen zu hoch ist und sich die Dachhaken auf den Dachziegeln abstützen.

Aus AT 13559 U1 ist eine Aufdach-Befestigungsvorrichtung bekannt. Ein rechteckiges Abdeckteil ersetzt hierbei einen Dachziegel. Eine Umhüllung umhüllt einen Basishaken, an dem z.B. ein Photovoltaikmodul befestigt werden kann.

Nachteilig daran ist, dass das Abdeckteil vergleichsweise instabil ist und sich leicht verbiegen kann. Auch läuft Regenwasser unkontrolliert ab. Ferner ist die Umhüllung nicht dicht, sodass dadurch Verschmutzungen und/oder Wasser eindringen können.

Es ist daher eine Aufgabe der Erfindung, eine Abdeckvorrichtung sowie ein System zu schaffen, welche/s auf einfache und kostengünstige Weise ein Eindringen von Verschmutzungen und/oder Wasser verhindert.

Die Lösung dieser Aufgabe erfolgt durch die Gegenstände der unabhängigen Ansprüche.

Die erfindungsgemäße Abdeckvorrichtung ist zum Abdecken eines Befestigungsbereichs eines Dachs zur Befestigung eines Solarpanels oder eines Photovoltaikmoduls ausgebildet oder kann hierzu verwendet werden.

Bei dem Dach kann es sich z.B. um ein Schrägdach handeln.

Vorzugsweise wird im Befestigungsbereich ein Dachhaken am Dach befestigt. Beispielsweise kann der Dachhaken an einer Dachlatte und/oder einem Dachbalken verschraubt werden. Der Dachhaken kann, wie etwa eine Antenne, auf einer Dachlatte und/oder einem Dachbalken aufgeständert werden.

Am Dachhaken kann unmittelbar oder mittelbar, z.B. über eine Montageschiene, ein Solarpanel oder ein Photovoltaikmodul befestigt werden. Die Montageschiene kann am Dachhaken horizontal oder vertikal befestigt werden.

Die Abdeckvorrichtung weist eine Metallplatte auf.

Die Metallplatte kann vorzugsweise rechteckförmig, z.B. quadratisch, ausgebildet sein.

Beispielsweise kann die Metallplatte eine Höhe zwischen 30 cm und 60 cm, vorzugsweise zwischen 45 cm und 55 cm, aufweisen. Die Breite kann beispielsweise zwischen 40 cm und 70 cm, vorzugsweise zwischen 50 cm und 60 cm, betragen.

Von der Abmessung kann die Metallplatte z.B. mindestens oder genau einen, zwei, drei oder vier Dachziegel ersetzen. Grundsätzlich ist die Abmessung jedoch beliebig groß und kann an die jeweiligen Erfordernisse angepasst werden.

Beispielsweise kann die Metallplatte an die gewünschte Position auf dem Dach verschoben werden. Durch die Dimensionierung ist ein gewisses Spiel vorhanden, um den individuellen Gegebenheiten auf dem Dach, z.B. der Position von Dachlatten und/oder Dachbalken, Rechnung zu tragen.

Die Stärke der Metallplatte kann beispielsweise zwischen 0,1 mm und 3 mm, vorzugsweise zwischen 0,1 mm und 1 mm, besonders bevorzugt zwischen 0,1 mm und 0,5 mm, z.B. 0,3 mm, betragen. Durch die geringe Stärke der Metallplatte kann sich diese wie eine Folie verhalten.

Die Metallplatte weist somit vorzugsweise ein geringes Gewicht auf, was die Handhabung erleichtert.

Beispielsweise kann die Metallplatte ein Aluminium- und/oder Bleimaterial umfassen oder daraus bestehen. Vorzugsweise handelt es sich bei der Metallplatte um ein gewalztes Aluminiumblech und/oder Bleiblech.

Die Metallplatte weist eine Aussparung für einen Dachhaken auf. Die Aussparung ist vorzugsweise zentral und/oder mittig angeordnet. Vorzugsweise wird die Aussparung vollständig von der Metallplatte umschlossen, d.h. die Aussparung ist nicht seitlich offen.

Beispielsweise kann die Aussparung rund, z.B. kreisförmig, oval oder eckig, beispielsweise rechteckförmig, z.B. quadratisch sein.

Eine ovale Aussparung kann beispielsweise eine Höhe zwischen 5 cm und 20 cm, vorzugsweise zwischen 10 cm und 15 cm aufweisen. Die Breite kann beispielsweise zwischen 3 cm und 10 cm, vorzugsweise zwischen 5 cm und 7 cm, betragen.

Die Aussparung kann vorzugsweise durch ein schneidendes und/oder zerspanendes Verfahren, z.B. Schneiden, Drehen, Bohren, Fräsen und/oder Schleifen, geschaffen werden. Auch kann die Aussparung ausgestanzt, ausgestrahlt oder ausgelasert sein.

Der Dachhaken kann beispielsweise an einer Dachlatte und/oder einem Dachbalken befestigt, z.B. verschraubt werden. Durch die Aussparung kann der Dachhaken durch die Metallplatte geführt werden.

Die Metallplatte weist einen verformbaren, also vorzugsweise biegbaren und/oder flexiblen, Anpassbereich bzw. Anpassabschnitt auf. Als Teil der Metallplatte ist der Anpassbereich plattenförmig. Die Verformbarkeit kann z.B. über die Dicke der Metallplatte und/oder das Material der Metallplatte gewährleistet werden.

Bei dem Anpassbereich handelt es sich vorzugsweise um einen im montierten Zustand unteren Bereich, z.B. das untere Drittel, Viertel, Fünftel, Sechstel oder Siebtel, der Metallplatte.

Der Anpassbereich kann an die Form der sich an die Abdeckvorrichtung, vorzugsweise darunter, anschließenden Dachziegel angepasst werden. Beispielsweise kann der Anpassbereich per Hand bei der Montage an die Kontur der Dachziegel angeformt und/oder angedrückt werden.

Vorzugsweise überlappen der Anpassbereich und die Dachziegel.

Auf diese Weise wird verhindert, dass Verschmutzungen und/oder Wasser am Übergang zwischen der Abdeckvorrichtung und den Dachziegeln eindringen. Beispielsweise Regen- und/oder Schmelzwasser können vielmehr ungehindert ablaufen.

Die Metallplatte weist einen Abdeckbereich bzw. Abdeckabschnitt auf, wobei der Abdeckbereich Riffelungen aufweist. Als Teil der Metallplatte ist der Abdeckbereich plattenförmig.

Die Riffelungen erhöhen die Stabilität der Metallplatte. So hängt die Metallplatte beispielsweise nicht durch.

Die Metallplatte kann z.B. zunächst gewälzt werden. Anschließend kann eine Riffelung eingebracht werden, beispielsweise mittels einer oder mehrerer Prägerolle/n.

Der Begriff Riffelungen ist breit zu verstehen und umfasst beispielsweise auch wellenförmige, sägezahnförmige, rechteckförmige und/oder trapezförmige Muster.

Die Riffelung ist beispielsweise auf der Ober- und/oder Unterseite der Metallplatte vorgesehen. Vorzugsweise ist die Riffelung sowohl auf der Oberseite als auch auf der Unterseite vorhanden. So können Berge auf der Oberseite beispielsweise die Täler auf der Unterseite bilden und umgekehrt.

Vorzugsweise sind die Riffelungen in Längsrichtung angeordnet. Verschmutzungen und/oder Wasser kann somit von oben nach unten geregelt abgeführt werden. So kann beispielsweise bei Wind Wasser abgeführt werden.

Der Wind kann das Wasser beispielsweise nicht so leicht seitlich unter die Eindeckung treiben, da in den Tälern der Riffelung windstille Zonen entstehen.

Die Metallplatte ist vorzugsweise einstückig geformt. Beispielsweise können der Abdeckbereich und der Anpassbereich einstückig geformt sein. Vorzugsweise weisen der Abdeckbereich und der Anpassbereich dasselbe Material auf. Für die Anpassung an die Form der Dachziegel ist folglich kein separates Material notwendig. Dadurch können die Herstellungskosten gering gehalten werden.

Vorzugsweise gehen der Abdeckbereich und der Anpassbereich ineinander über. Beispielsweise sind der Abdeckbereich und der Anpassbereich gleich breit.

Die Abdeckvorrichtung weist eine die Aussparung, vorzugsweise vollständig, umschließende Gummimanschette auf.

Bei der Gummierung kann es sich beispielsweise um einen Moosgummi handeln, z.B. aus Ethylen-Propylen-Dien-(Monomer)-Kautschuk (EPDM). Beispielsweise ist Moosgummi UV-beständig.

Vorzugsweis kann sich die Gummimanschette nach oben hin verjüngen.

Beispielsweise kann am oberen Ende der Gummimanschette ein länglicher Schlitz vorgesehen sein. Durch den Schlitz kann ein Dachhaken hindurchgesteckt werden.

Das Gummimaterial kann vorzugsweise ein gewisses Spiel aufweisen. So können auch unterschiedliche Dachhaken, welche kleinere Abweichungen bezüglich der Breite und/oder Dicke aufweisen, eingesetzt werden.

Vorzugsweise liegt die Gummimanschette am oberen Ende vollumfänglich am Dachhaken an.

Der Bereich, in dem ein Dachhaken durch die Aussparung geführt wird, wird durch die Gummimanschette abgedichtet.

Ein Eindringen von Verschmutzungen und/oder Wasser wird somit verhindert.

Weiterbildungen der Erfindung sind auch den abhängigen Ansprüchen, der Beschreibung sowie den beigefügten Zeichnungen zu entnehmen.

Gemäß einer Ausführungsform ist der Anpassbereich frei von Riffelungen.

Beispielsweise kann der Anpassbereich bereits von vorne herein keine Riffelungen aufweisen. Alternativ kann dieser Bereich, beispielsweise aus herstellungstechnischen Gründen, zunächst geriffelt und anschließend platt gepresst und/oder gewalzt werden. So kann z.B. die gesamte Metallplatte zunächst mit einer Riffelung versehen werden und die Riffelungen anschließend an den Bereichen, in denen keine Riffelung gewünscht ist, geplättet werden.

Dadurch, dass der Anpassbereich frei von Riffelungen ist, kann dieser auf einfache Weise verformt und z.B. an die Form der sich anschließenden Dachziegel angepasst werden.

Vorzugsweise kann auch ein im montierten Zustand oberer Bereich der Metallplatte frei von Riffelungen sein. Dies kann beispielsweise ein Abkanten erleichtern.

Nach einer weiteren Ausführungsform ist die Metallplatte an wenigstens einer Seite abgekantet bzw. hochgekantet. Vorzugsweise ist die Metallplatte an drei Seiten abgekantet bzw. hochgekantet.

Die Abkantung erfolgt z.B. nach oben hin, vorzugsweise in Richtung der Gummimanschette.

Beispielsweise kann wenigstens ein Rand der Metallplatte nach innen geknickt bzw. gefaltet sein. Ein Eindringen von Verschmutzungen und/oder Wasser, z.B. Schmelzwasser und/oder Schlagregen, kann dadurch verhindert werden.

Der umgeknickte Rand kann beispielsweise eine Breite zwischen 1 cm und 5 cm, vorzugsweise zwischen 2 cm und 4 cm, z.B. 3 cm, aufweisen.

An den Rändern kann optional eine Gummierung und/oder ein Schaumstoffband vorgesehen sein. Die Gummierung und/oder das Schaumstoffband kann beispielsweise eine dreieckförmige Querschnittsfläche aufweisen. Beispielsweise kann die Gummierung und/oder das Schaumstoffband eine Höhe zwischen 1 cm und 5 cm, vorzugsweise zwischen 2 cm und 4 cm, z.B. 3 cm, aufweisen. Die Breite kann beispielsweise zwischen 0,5 cm und 4 cm, vorzugsweise zwischen 1 cm und 3 cm, z.B. 2 cm, betragen. Die Gummierung und/oder das Schaumstoffband kann z.B. für eine seitliche Abdichtung sorgen.

Bei der Gummierung kann es sich beispielsweise um einen Moosgummi handeln, z.B. aus EPDM.

Die Gummierung und/oder das Schaumstoffband kann z.B. an drei Seiten der Metallplatte aufgeklebt werden, um ein Eindringen von Feuchtigkeit unter die Dacheindeckung zu verhindern.

Alternativ oder zusätzlich kann am unteren Rand ein, vorzugsweise doppelklebendes, Abdichtband vorgesehen sein.

Gemäß einer weiteren Ausführungsform ist die Gummimanschette auf der Oberseite der Metallplatte befestigt, vorzugsweise vernietet.

Die Gummimanschette sorgt für eine Abdichtung der Aussparung. Dadurch, dass die Gummimanschette auf der Oberseite der Metallplatte befestigt ist, können keine Verschmutzungen und/oder kein Wasser unter die Metallplatte gelangen.

Durch ein Vernieten kann eine einfache und kostengünstige Befestigung erfolgen.

Nach einer weiteren Ausführungsform ist ein Befestigungsrahmen zur Befestigung der Gummimanschette vorgesehen.

Ein unterer Rand der Gummimanschette kann beispielsweise auf der Metallplatte aufliegen und von oben mit dem Befestigungsrahmen gesichert werden.

Der Befestigungsrahmen kann beispielsweise ein Metallmaterial aufweisen oder daraus bestehen.

Vorzugsweise ist der Befestigungsrahmen z.B. als Befestigungsring, Befestigungsoval oder Befestigungsrechteck ausgebildet.

Der Befestigungsrahmen kann beispielsweise eine Breite zwischen 0,5 cm und 3 cm, vorzugsweise zwischen 0,5 cm und 1 cm, aufweisen.

Beispielsweise kann der Befestigungsrahmen an die Form der Aussparung angepasst sein.

Der Befestigungsrahmen kann die Aussparung vorzugsweise vollständig umschließen.

Gemäß einer weiteren Ausführungsform ist an der Oberseite der Metallplatte eine Schutzvorrichtung für die Gummimanschette vorgesehen.

Die Schutzvorrichtung kann beispielsweise als Winkel ausgebildet sein.

Im montierten Zustand kann die Schutzvorrichtung oberhalb der Gummimanschette angeordnet sein.

Durch die Schutzvorrichtung wird die Gummimanschette beispielsweise vor abrutschendem Eis und/oder Schnee geschützt.

Die Schutzvorrichtung kann als separates Bauteil ausgebildet sein und beispielsweise unmittelbar auf der Metallplatte befestigt sein. Alternativ kann die Schutzvorrichtung am Befestigungsring ausgeformt und/oder damit verbunden sein.

Nach einer weiteren Ausführungsform ist an der Unterseite der Metallplatte eine Stabilisierungsvorrichtung vorgesehen.

Die Stabilisierungsvorrichtung kann, z.B. zentral, an der Unterseite der Metallplatte befestigt, beispielsweise verklebt und/oder vernietet, sein.

Die Stabilisierungsvorrichtung kann beispielsweise in einem oberen Bereich und/oder im Bereich der Aussparung der Metallplatte angeordnet sein.

Beispielsweise kann die Stabilisierungsvorrichtung plattenförmig ausgebildet sein.

Vorzugsweise ist die Stabilisierungsvorrichtung kleiner als die Metallplatte. Beispielsweise ist die Fläche der Stabilisierungsvorrichtung höchstens 1/2, 1/3, 1/4, 1/5 oder 1/6 so groß wie Fläche der Metallplatte. Die Stabilisierungsvorrichtung stabilisiert somit lediglich einen Abschnitt der Metallplatte.

Die Stabilisierungsvorrichtung kann beispielsweise ein Metallmaterial umfassen oder daraus bestehen.

Gemäß einer weiteren Ausführungsform weist die Stabilisierungsvorrichtung eine Öffnung für einen Dachhaken auf.

Vorzugsweise weist die Öffnung dieselbe Form und/oder Größe wie die Aussparung der Metallplatte auf. Die Öffnung kann unterhalb der Aussparung liegen, um einen gemeinsamen Durchgang für einen Dachhaken zu schaffen.

Ein Dachhaken kann somit durch die Öffnung der Stabilisierungsvorrichtung und durch die Aussparung der Metallplatte geführt werden.

Nach einer weiteren Ausführungsform ist die Stabilisierungsvorrichtung an wenigstens einer Seite abgekantet. Vorzugsweise ist die Stabilisierungsvorrichtung an drei Seiten abgekantet.

Die Abkantung erfolgt z.B. nach unten hin, vorzugsweise in Richtung einer Dachlatte oder eines Dachbalkens.

Vorzugsweise kann sich die Abkantung rechtwinklig zur eigentlichen Stabilisierungsvorrichtung erstrecken.

Eine obere Abkantung kann hierbei beispielsweise zum Einhängen in eine Dachlatte oder einen Dachbalken dienen.

Seitliche Abkantungen können die Stabilität erhöhen.

Die Erfindung betrifft auch ein System mit einer erfindungsgemäßen Abdeckvorrichtung und einem Dachhaken zur Befestigung eines Solarpanels oder eines Photovoltaikmoduls.

Gemäß einer Ausführungsform ist der Dachhaken durch die Aussparung der Metallplatte und die Gummimanschette geführt.

Am Dachhaken kann unmittelbar oder mittelbar, z.B. über eine Montageschiene, ein Solarpanel oder ein Photovoltaikmodul befestigt werden.

Die Abdeckvorrichtung sorgt für eine Abdeckung bzw. Abdichtung des Befestigungsbereichs.

Schließlich betrifft die Erfindung auch ein Verfahren zur Befestigung eines Dachhakens an einem Dach mit einer erfindungsgemäßen Abdeckvorrichtung oder einem erfindungsgemäßen System.

Vorzugsweise wird die Lage der Dachhaken bestimmt und/oder die Dacheindeckung im Befestigungsbereich aufgedeckt. Die Dachlatten und/oder Dachbalken sind dadurch zugänglich.

Der Dachhaken wird, beispielsweise an einer Dachlatte und/oder einem Dachbalken, befestigt, z.B. verschraubt.

Die Abdeckvorrichtung wird über den Dachhaken gestülpt. Vorzugsweise ist der Dachhaken nun in der Gummimanschette aufgenommen.

Optional kann eine Ausrichtung der Abdeckvorrichtung erfolgen und/oder die angrenzenden Dachziegel wieder eingedeckt werden.

Der Anpassbereich der Metallplatte wird an die nach unten anschließenden Dachziegel angeformt bzw. angedrückt.

Alle hier beschriebenen Ausführungsformen und Bauteile der Vorrichtungen sind vorzugsweise dazu ausgebildet, nach dem hier beschriebenen Verfahren montiert zu werden. Ferner können alle hier beschriebenen Ausführungsformen der Vorrichtungen sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Schnittansicht einer Ausführungsform eines erfindungsgemäßen Systems im eingebauten Zustand,
- Fig. 2: eine teilgeschnittene, obere Perspektivansicht des Systems gemäß Fig. 1,
- Fig. 3: eine teilgeschnittene, untere Perspektivansicht des Systems gemäß Fig. 1,
- Fig. 4: eine Seitenansicht einer Ausführungsform eines erfindungsgemäßen Systems,
- Fig. 5: eine obere Perspektivansicht des Systems gemäß Fig. 4, und
- Fig. 6: eine untere Perspektivansicht des Systems gemäß Fig. 4.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Beispielsweise kann ein anderer Dachhaken verwendet werden. Ferner sind der Befestigungsrahmen sowie die Stabilisierungsvorrichtung optional. Schließlich kann die Metallplatte auch vollständig geriffelt sein.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

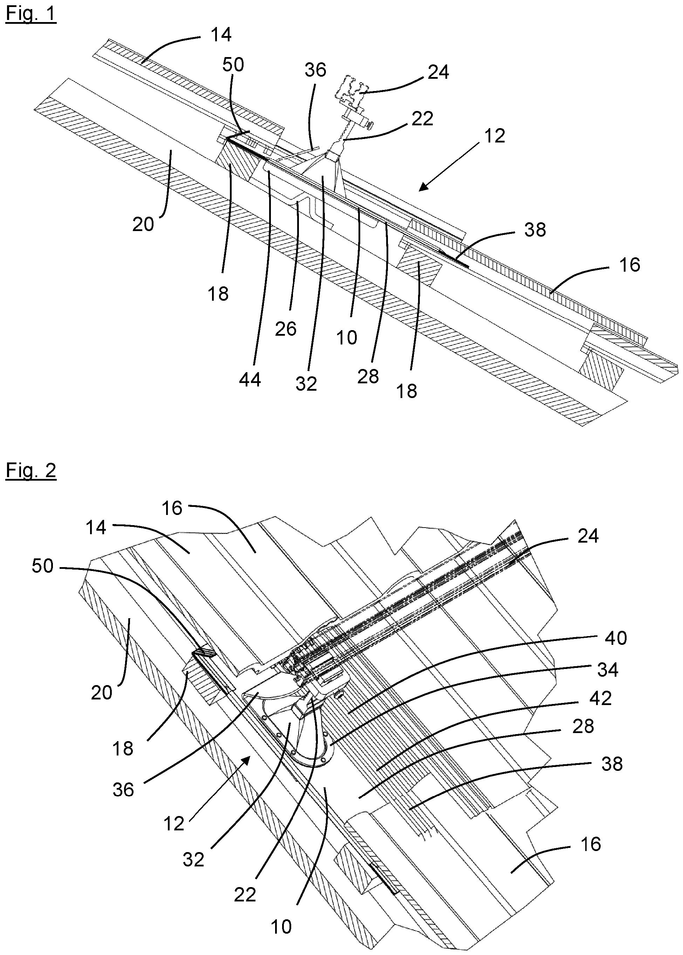

Fig. 1 bis 3 zeigen eine Abdeckvorrichtung 10 zum Abdecken eines Befestigungsbereichs 12 eines Dachs 14 mit Dachziegeln 16. Die Dachziegel 16 sind an Dachlatten 18 eingehängt, wobei die Dachlatten 18 an Dachbalken 20 befestigt sind.

An einem Dachhaken 22 kann eine Montageschiene 24 für ein Solarpanel oder ein Photovoltaikmodul befestigt, z.B. festgeklemmt, werden.

Der Dachhaken 22 kann einen Standfuß 26 aufweisen, über den der Dachhaken 22 z. B. am Dachbalken 20 befestigt, beispielsweise verschraubt, ist.

Die Abdeckvorrichtung 10 weist eine Metallplatte 28 mit einer Aussparung 30 für den Dachhaken 22 auf.

Die Aussparung 30 wird von einer Gummimanschette 32, in der der Dachhaken 22 angeordnet ist, umschlossen.

Die Gummimanschette 32 kann über einen Befestigungsrahmen 34 an der Metallplatte 28 befestigt, z.B. vernietet, sein.

Am Befestigungsrahmen 34 kann eine Schutzvorrichtung 36 für die Gummimanschette 32 ausgebildet sein.

Die Abdeckvorrichtung 10 weist einen verformbaren Anpassbereich 38 auf. Der Anpassbereich 38 kann an die Kontur der darunter anschließenden Dachziegel 16 angepasst werden. Beispielsweise kann der Anpassbereich 38 per Hand angedrückt werden.

Die Abdeckvorrichtung 10 weist ferner einen Abdeckbereich 40 mit Riffelungen 42 auf.

An der Unterseite der Metallplatte 28 kann eine Stabilisierungsvorrichtung 44 mit Abkantungen 46 vorgesehen sein. Über eine vordere Abkantung 46 kann die Metallplatte 28 an der Dachlatte 18 eingehängt werden.

Die Stabilisierungsvorrichtung 44 weist eine Öffnung 48 auf, durch die der Dachhaken 22 geführt wird.

Die Öffnung 48 kann dieselbe Form wie die Aussparung 30 aufweisen.

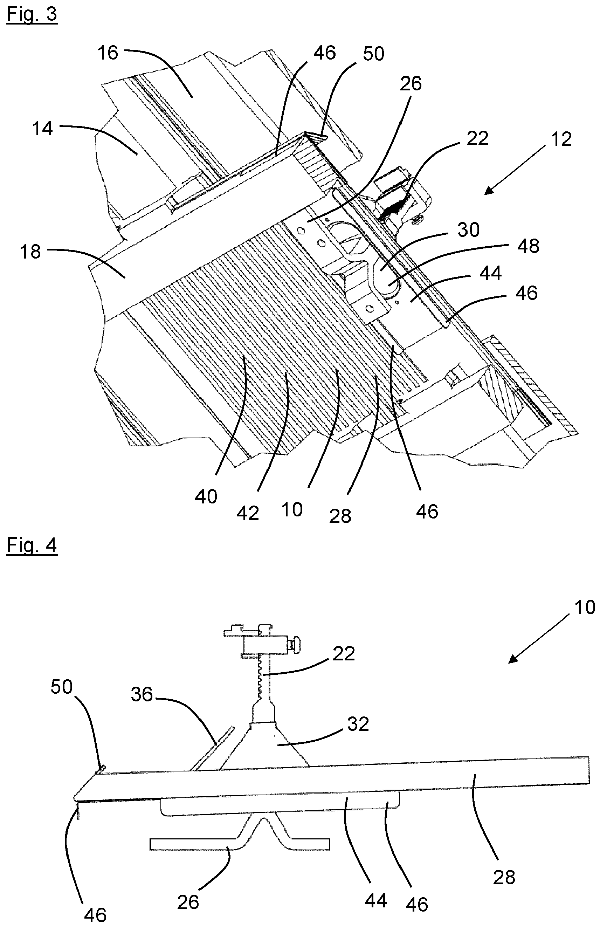

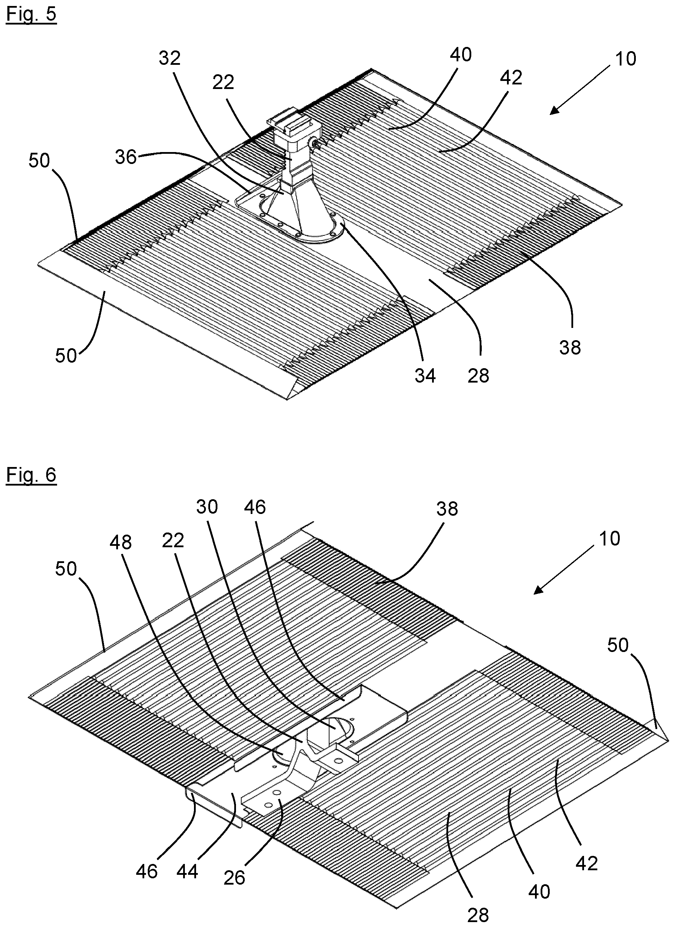

Wie in den. Fig. 4 bis 6 gezeigt ist, kann auch die Metallplatte 28 an drei Seiten abgekantet sein. Vorzugsweise sind die Seiten nach oben in Richtung der Gummimanschette 32 abgekantet und bilden einen Knick 50. So wird verhindert, dass Verschmutzungen und/oder Wasser in das Dach eindringen.

### Bezugszeichenliste

- 10: Abdeckvorrichtung
- 12: Befestigungsbereich
- 14: Dach
- 16: Dachziegel
- 18: Dachlatte
- 20: Dachbalken
- 22: Dachhaken
- 24: Montageschiene
- 26: Standfuß
- 28: Metallplatte
- 30: Aussparung
- 32: Gummimanschette
- 34: Befestigungsrahmen
- 36: Schutzvorrichtung
- 38: Anpassbereich
- 40: Abdeckbereich
- 42: Riffelung
- 44: Stabilisierungsvorrichtung
- 46: Abkantung
- 48: Öffnung
- 50: Knick

## Patentansprüche

1. Abdeckvorrichtung (10) zum Abdecken eines Befestigungsbereichs (12) eines Dachs (14) zur Befestigung eines Solarpanels oder eines Photovoltaikmoduls, aufweisend
eine Metallplatte (28) mit einer Aussparung (30) für einen Dachhaken (22), mit einem verformbaren Anpassbereich (38) und mit einem Abdeckbereich (40), wobei der Abdeckbereich (40) Riffelungen (42) aufweist, und eine die Aussparung (30) umschließende Gummimanschette (32).

2. Abdeckvorrichtung nach Anspruch 1,
**dadurch gekennzeichnet,**
**dass** der Anpassbereich (32) frei von Riffelungen (42) ist.

3. Abdeckvorrichtung nach Anspruch 1 oder 2,
**dadurch gekennzeichnet,**
**dass** die Metallplatte (28) an wenigstens einer Seite abgekantet ist.

4. Abdeckvorrichtung nach einem der vorhergehenden Ansprüche,
**dadurch gekennzeichnet,**
**dass** die Gummimanschette (32) auf der Oberseite der Metallplatte (28) befestigt, vorzugsweise vernietet, ist.

5. Abdeckvorrichtung nach einem der vorhergehenden Ansprüche,
**dadurch gekennzeichnet,**
**dass** ein Befestigungsrahmen (34) zur Befestigung der Gummimanschette (32) vorgesehen ist.

6. Abdeckvorrichtung nach einem der vorhergehenden Ansprüche,
**dadurch gekennzeichnet,**
**dass** an der Oberseite der Metallplatte (28) eine Schutzvorrichtung (36) für die Gummimanschette (32) vorgesehen ist.

7. Abdeckvorrichtung nach einem der vorhergehenden Ansprüche,
**dadurch gekennzeichnet,**
**dass** an der Unterseite der Metallplatte (28) eine Stabilisierungsvorrichtung (44) vorgesehen ist.

8. Abdeckvorrichtung nach Anspruch 7,
**dadurch gekennzeichnet,**
**dass** die Stabilisierungsvorrichtung (44) eine Öffnung (48) für einen Dachhaken (22) aufweist.

9. Abdeckvorrichtung nach Anspruch 7 oder 8,
**dadurch gekennzeichnet,**
**dass** die Stabilisierungsvorrichtung (44) an wenigstens einer Seite abgekantet ist.

10. System mit einer Abdeckvorrichtung (10) nach einem der vorhergehenden Ansprüche und einem Dachhaken (22) zur Befestigung eines Solarpanels oder eines Photovoltaikmoduls.
